Europäisches Patentamt

European Patent Office

Office européen des brevets

(19)

(11) **EP 0 840 963 B1**

(12) **EUROPEAN PATENT SPECIFICATION**

(45) Date of publication and mention
of the grant of the patent:
**20.09.2000 Bulletin 2000/38**

(21) Application number: **96922834.5**

(22) Date of filing: **18.06.1996**

(51) Int Cl.$^7$: **H04J 3/06**, H04B 10/207

(86) International application number:
**PCT/EP96/02639**

(87) International publication number:
**WO 97/05718 (13.02.1997 Gazette 1997/08)**

(54) **METHOD AND DEVICE FOR THE COARSE RANGING OF A TDMA PON SYSTEM**

VERFAHREN UND EINRICHTUNG ZUR ABSTANDMESSUNG IN EINEM TDMA-SYSTEM, EINES PASSIVEN OPTISCHEN NETZES

PROCEDE ET DISPOSITIF DE MESURE APPROCHEE DE DISTANCE D'UN SYSTEME DE RESEAU OPTIQUE PASSIF A ACCES MULTIPLE PAR REPARTITION DANS LE TEMPS

(84) Designated Contracting States:
**DE FR IT NL SE**

(30) Priority: **25.07.1995 IT MI951606**

(43) Date of publication of application:
**13.05.1998 Bulletin 1998/20**

(73) Proprietor: **Italtel s.p.a.**
**20154 Milano (IT)**

(72) Inventor: **FELLEGARA, Andrea**
**I-20123 Milan (IT)**

(74) Representative: **Giustini, Delio**
**c/o Italtel S.p.A.,**
**Cascina Castelletto**
**20019 Settimo Milanese (MI) (IT)**

(56) References cited:
**EP-A- 0 486 931**       **EP-A- 0 521 197**
**EP-A- 0 585 087**

**Description**

Field of the Invention

The present invention relates to a method to carry out the definition operations in a first approximation (coarse ranging) of the real distance between a line termination station OLT (Optical Line Termination) and an ONU (Optical Network Unit) of a Passive Optical Network PON substation of a TDMA PON (Time Division Multiple Access Passive Optical Network ) type transmission system.

As well known the PON systems are characterized by the fact that a single line termination OLT (Optical Line Termination) is interconnected with a certain number of network units ONU (Optical Network Units) through a passive optical network realized in single-mode optical fibre and passive optical components.

The line termination OLT is a device which is normally located in the communication stations.

The network unit ONU is on the other hand a device which is positioned near the user. Each network unit ONU enables a certain number of users to have access to the optical network through various types of interfaces. The PON systems are point-multipoint systems suitable to support the services of the B-ISDN (Broadband Integrated Service Digital Network) as well as interactive and distributive broadband services such as for example the television services.

In the PON systems the same optical signal emitted by the termination OLT reaches without distinction all ONU network units in a broadcast way while in the opposite (centripetal) direction the optical signals emitted by each ONU get together in order to set up a single optical signal received by the OLT. the optical communication channel between the OLT and the different. ONUs is only partially identical, i.e. in the passage from the OLT up to the ramification towards the ONUs.

The centripetal transmissions directed by each network unit ONU towards the termination OLT use a TDMA type communication protocol.

Using such TDMA protocol the transmission by each one of the network units ONU is only allowed in well defined time intervals thus to avoid that, at a ramification at the same instant the optical signals arriving from two or more different ONUs may overlap each other (and therefore cancel each other and vice versa).

This synchronization, defined as a whole as the ranging procedure, is carried out by the elaboration of the delay values and by the transmission of suitable synchronism data or commands by the termination OLT towards each network unit ONU.

On the basis of these synchronism information each network unit ONU recognizes the time slot within which it has to carry out the own transmissions towards the OLT.

In the realization of the ranging procedure the termination OLT takes into account the time delays introduced by optical fibre channels which connect the termination itself with each network unit ONU.

These time delays are generally different for each network unit ONU as they depend on the different characteristics of the fibres and on the different lengths of the transmission channels.

The delay value varies also in time in function of the temperature of the optical fibres which are crossed by the signal.

At present due to the always major needs in terms of the channel band of the communication networks, the PON systems are often used to transmit digital signals with a very high bit rate, at present typically of 622 Mbit/s.

As at this transmission speed (or modulation frequency) the time duration or cycle is extremely reduced (about 1.6 ns), the synchronization and timing operations of the different signals become of vital importance for the good functioning of the TDMA PON system.

The description hereafter will refer nearly systematically to the case of digital transmission systems. Moreover it has to be understood, as reminded hereafter, that the considerations and solutions referred to a system operating in a digital way are also valid and useful in the case of systems operating in the analog way. In practice the modulation or rather the amplitude modulation frequency of the optical signal may be of the digital or impulsive (bit rate) type or of the analog type.

The ranging procedure on which the synchronization is based avails itself normally of delay data valued in three distinct steps called coarse ranging, static ranging and fine ranging, respectively.

During the phase of coarse ranging which is normally carried out at the moment of installation or during the maintenance of the PON system a synchronization is obtained with a time resolution comprised in a range of tenths of bits.

The following static ranging phase always carried out at the moment of installation or during the maintenance of the PON system, but with techniques which are different from those used to carry out the coarse ranging, makes it possible to reach a time resolution comprised in a range of 1 bit.

The last phase of fine ranging is dynamically carried out during the normal functioning of the PON system and makes it possible to maintain the time resolution comprised in a range of 1 bit.

During this fine ranging step all delay variations, introduced for example by temperature variations during the crossing of the fibre by the signals have to be compensated dynamically.

It is important to underline the fact that the static ranging procedure cannot prescind from the result acquired through a first procedure of first approximation ranging or of coarse ranging and analogously the procedures of fine ranging (dynamic ranging) cannot be realized without having defined the relative distance (or of the transmission delay along a certain passage of the optical channel with a resolution of the time duration of one bit).

Background Art

In the Italian patent application No. MI94A000768 in the name of the same applicant entitled: Method and device for the timing of the transmission of digital signals in a system TDMA PON" a method and a device for dynamic timing (fine ranging) is described with high reliability also in presence of important transmission parameter variations of the system TDMA PON, using an electronic circuit of the CMOS type with low electrical power consumption compared to the systems commonly realized in ECL technology.

While the static ranging and fine ranging (dynamic ranging) procedures are obviously carried out through the recording and elaborations carried out on digital signals at the data transmission speed of the system (which at present may be typically of 622 Mbit/s), the coarse ranging procedure is a procedure which, having to define in first approximation the distance or the delay of a certain channel between the station OLT and a determined substation ONU of the system, with an approximation in the range of some tenths of bits requires the transfer into the network of a specific signal with a high bit rate of the signal CWmode and/or BURSTmode of the system.

One known solution is that of carrying out the coarse ranging in the analog mode using a low frequency sinusoidal signal in the range of 10KHz, such not to interfere with the high bit rate channel. This solution involves at the optical level the use of special analog lasers, i.e. laser with the capacity modulating the intensity of the emitted coherent light which have to be extremely linear making it possible to superpose a sinusoidal amplitude modulation to the digital modulation, or the use of lasers even of low price production but especially selected through specific tests in order to allow the use of lasers with a quite low cost compared to the high cost of specific "analog" lasers. In practice even the second approach may prove itself quite expensive if not even more expensive than the first option in the low yield case of the selection. To this has to be added the lack of warranty by the laser manufacturer.

In the publication entitled "Out-of-band ranging method for ATM over PON access systems" by Van Hejiningen et al, Proc. ECOC'94 pages 271 - 274 and the technical report CSELT Vol. 22, Nr. 5, pages 605 - 612 (1994), a method of coarse ranging is described which is based on the phase measure of a tone with low frequency and with low level transmitted by a station ONU subjected to the regulation procedures on the basis of the coarse ranging after command by the line termination OLT. In the described system the signal in CWmode has a bit rate of 622 Mbit/s while the frequency of the ranging signal is of about 9KHz. In order to comply with the requirements of a reliable transmission of the ranging signal, the laser used on the transmitter side of the OLT, generally indicated as TX CW, must be a component specifically suitable also for analog applications or, as a less expensive alternative, at least a so-called distributed feedback laser on purpose selected in terms of specific individual characteristics of coherence and intrinsic noise, i.e. the so-called Relative Intensive Noise (RIN). Moreover, especially in the case of the last option, the optical feedback must be carefully checked as the laser noise may notoriously increase.

In all cases, to carry out the coarse ranging, the use of optical components intrinsically expensive or selected is currently required.

EP-A-0 521 197 discloses a method for determining equalisation delays in an optical transmission system including a first optical upstream channel and a second optical upstream channel, both transmitted on a single optical fiber. According to this method the coarse ranging is a low bit rate signal exclusively performed on the upstream direction and, in particular, the method includes the steps of sending a ranging command from OLT to ONU which is counter propagated with respect to the communication signal so as to activate a transmitter adapted to emit a reply ranging signal (i.e. from ONU to OLT) which is co-propagating with the upstream data. For this reason, its detection is accomplished by using correlation technique, i.e. using a function which is a measure of the similarity of two co-propagating signals.

Objects of the Invention

Is one object of the present invention to provide a method and a device to carry out the definition of the first approximation optical distance (coarse ranging) in a passive optical network (PON) in a digital mode, realizable therefore with optical components with a relatively limited cost.

According to particular embodiment of the invention, a further object or advantage of the invention may be identified by the offer of a channel even though with a low bit rate permanently to be used for the implementation of service functions or accessory ones during the normal functioning of the network exploiting the installed optical components to carry out the coarse ranging.

## Summary of the Invention

Fundamentally the method of the invention is based on the use of a transmission system of the duplex type in which the digital ranging signal with low bit-rate is transmitted in opposite direction compared to the high bit-rate frequency (CWmode or BURSTmode) using optical couplers suitable to counterpropagate through the optical connection fibre the digital ranging signal with a fractionated power compared to the power of the high bit-rate (CW or BURST) compensation signal.

The counterpropagation of the ranging signal compared to the high bit-rate data traffic and the fractional characteristic of the power of the ranging signal transmitted through the fibre (for what concerns the effects even of modest importance of the retropropagation of the optical signal) makes it possible to use transmitters and receivers designed for the same wavelength of the system, for instance for 1300 nm without requiring the use of expensive multiplexing and de-multiplexing techniques on the base of the wavelength like the so-called techniques WDM (Wavelength De-Multiplexing).

Using for instance asymmetric couplers with a coupling ratio of 90/10 the losses due to the couplers in the counterpropagation direction of the optical ranging signal turn out to be well compensated by the increase of the power budget at the reduced transmission bit-rate of the digital ranging signal limiting on the other hand the transmitted power loss of the data signal with high bit-rate in the range of about 1 dB.

Moreover as it is a coarse ranging procedure the increased bit period (duration of the pulses) following the reduction of the bit-rate of the used digital ranging signal is perfectly compatible with the resolving requirements of the ranging procedure.

The objects of the present invention are therefore achieved through a method for the definition of the optical distance, in a first approximation, between a network unit and the relative line termination, realized according to the requirements of the following claim 1.

The objects of the present invention are also achieved through a device for the definition of the optical distance, in a first approximation between the network unit and the relative line termination realized according to the requirements of the following claim 7.

Further characteristic advantages of the present invention become also evident by the appended claims.

## Brief Description of the Drawings

The invention, together with further objects and advantages thereof, may be understood with reference to the following description, taken in conjunction with the accompanying drawings and in which:

Figure 1 shows the architecture of a digital coarse ranging system of the invention according to a first embodiment of the invention;
Figure 2 shows an alternative embodiment of the coarse ranging system of the invention;
Figure 3 shows a third embodiment of the coarse ranging system of the invention;
Figure 4 is a diagram which shows the course of the sensibility of a receiver for a certain relation signal/noise in function of the bit-rate;
Figure 5 is a diagram which shows the behaviour of the received sensitivity as a function of the bit rate;
Figure 6 is a diagram which shows the ranging sensitivity versus the total reflectance for two different values of the bit rate and the coupling ratio.

Tab. I shows the list of symbols mentioned under (1).

## Detailed Description of a Preferred Embodiment of the Invention

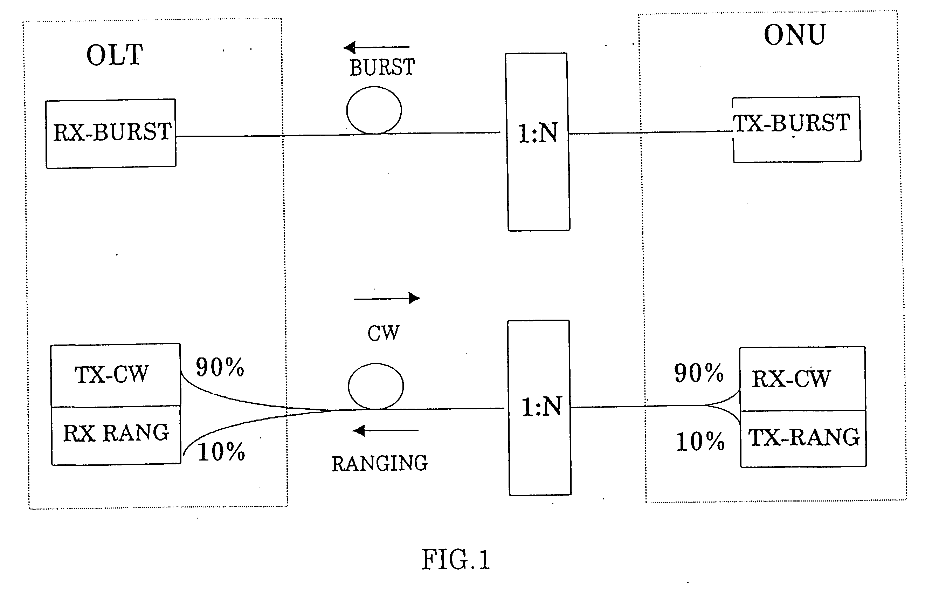

According to a first embodiment of the invention shown in Fig. 1, the coarse ranging of the optical upstream channel, i.e. from one determined substation ONU to the line termination OLT of the PON through which the data transmission takes place by means of a communication protocol of the TDMA type (Time Division Multiple Access) is carried out in an indirect way. The above applying the procedure on the inverted optical downstream channel, assuming both channels essentially identical or to be considered like this.

In a lot of cases, this may be true or the differences between both optical channels may be essentially negligible depending on the type of cable used or on other construction aspects of the PON.

According to this first embodiment of the invention each substation ONU of the PON is provided with a laser device (TX RANG) for the generation and transmission of the digital ranging signal towards the OLT on the downstream line besides the burst transmission laser device (TX BURST) for the data transmission in TDMA mode towards the OLT on the upstream line.

The signal CWmode contains in its interior the ranging activation command which qualifies the TX RANG through an optical coupler 90/10 to transmit on the downstream optical fibre the digital ranging signal counterpropagating compared to the CW flow towards the line termination OLT.

An asymmetric optical coupler 90/10 derives the signal CWmode with high bit-rate to be forwarded to the corresponding receiver RX-CW of the substation and counterpropagates through the optical downstream fibre the digital ranging signal generated by the specific laser (TX RANG) towards the line termination OLT.

This last one is provided with an analog coupler 90/10 to introduce in fibre the signal CWmode generated by the transmitter laser (TX-CW) and to derive the counterpropagated ranging signal through the same optical downstream fibre to the corresponding receiver (RX RANG).

Using asymmetric couplers, for instance with a power splitting relation 90/10, the ranging system subtracts about 1 dB of the power of the CWmode signal with high bit-rate introduced in the optical fibre of the downstream line. This modest power loss is amply compensated by the reduced cost of the optical components required for the realization of the coarse ranging system.

These optical components are in practice represented by a laser device with a relatively low cost as it does not require any particular coherence characteristics as it has to generate besides this a digital signal TX RANG with low bit-rate and by an asymmetric coupler for each substation ONU of the PON and of an analog asymmetric coupler and a receiver RX RANG of the ranging signal for the station OLT.

A further important cost reduction aspect consists in the fact that, having the possibility to carry out the coarse ranging by the use of a laser of the same wavelength used for the data transmission through the PON, the receiver RX-CW, the laser TX RANG and the asymmetric coupler of each substation ONU of the PON can be realized in an integrated way with evident benefits from the production cost point of view of such integrated units if bought at a discrete cost of optical components.

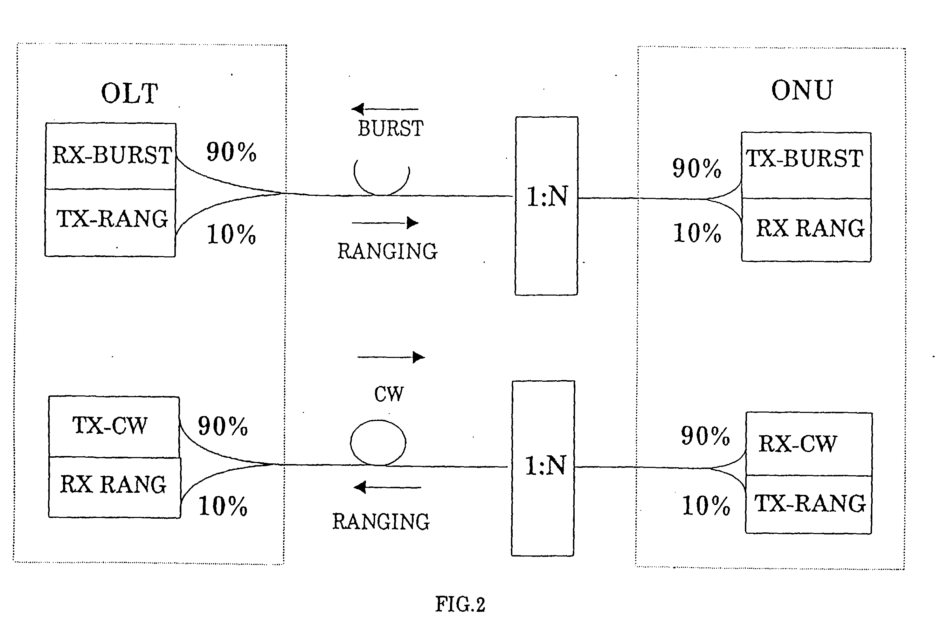

According to an alternative embodiment of the invention shown in Fig. 2 the coarse ranging is carried out with analog modes on the optical upstream channel (ranging activation) as well as on the optical downstream channel halving in this way the so defined ranging indeterminateness.

The duplication of the cost to realize the ranging structure on both fibres (optical channels), from and to a defined substation ONU of the PON besides the fact of halving the indeterminateness, may turn out amply justified by the permanent utility of a communication channel, even if with a low bit-rate, through which, once performed the task to carry out the coarse ranging innumerable functions may be carried out. In other words the structure realized for the need to carry out the coarse ranging remains usable as a service channel for control functions such as for instance monitoring, supervision, maintenance and so on.

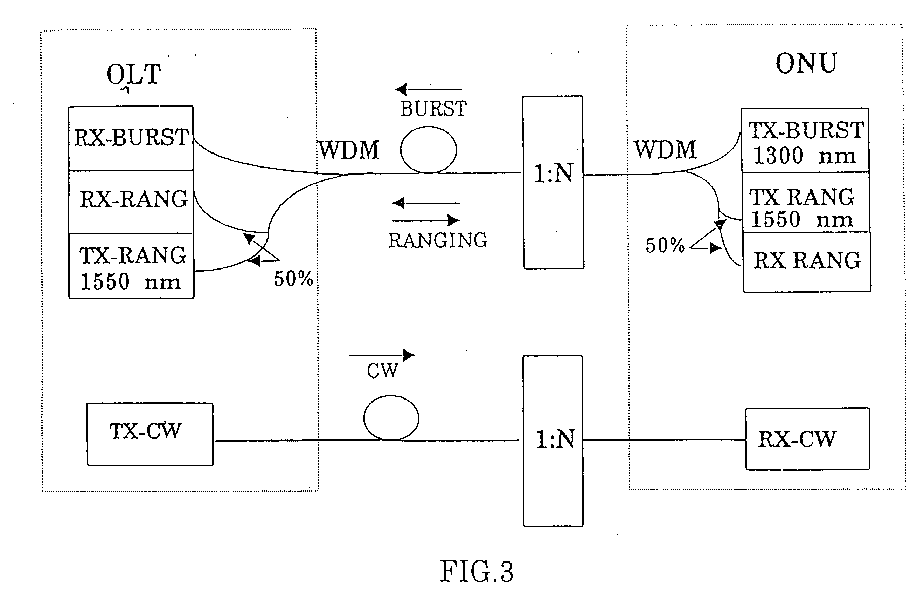

According to a further embodiment of the invention shown in Fig. 3, the coarse ranging is carried out exclusively through the upstream line providing the station OLT and each substation ONU with a ranging transmitter and receiver TX RANG and RX RANG, respectively, operating at a wavelength which is different from the wavelength of the communication system (TX BURST and RX BURST). In addition, according to this further embodiment, a wavelength multiplexer (WDM) is required to propagate the ranging signal and a coupler 50/50 at each end to realize the counterpropagation of the ranging activation signal compared to the high bit-rate burst signal used for the data transmission from the substation ONU to the station OLT in TDMA mode.

According to this last embodiment the coarse ranging is completely carried out on the optical upstream channel which must actually be calculated cancelling any indeterminateness due to differences of the length of optical channels in both directions. Moreover the overall losses due to the use of the WDMs and of the couplers 50/50 enable a power budget improvement or alternatively a bit-rate of the higher bit rate of the coarse ranging channel and therefore suitable to offer a service channel with higher performances.

A feasibility analysis of the system according to the invention has been made assuming the use of a FET-front-end receiver with common characteristics and operational parameters, as indicated in the following. Moreover, a B.E.R. of $10^{-9}$ is assumed and as a consequence a signal/noise relation Q=6.

The system power budget of fig. 2 is given by

$$\frac{P_t}{P_{r-data}} = A \cdot (k - \gamma)^2$$

$$\frac{P_t}{P_{r-rang}} = A \cdot (1 - k - \gamma)^2 \tag{1}$$

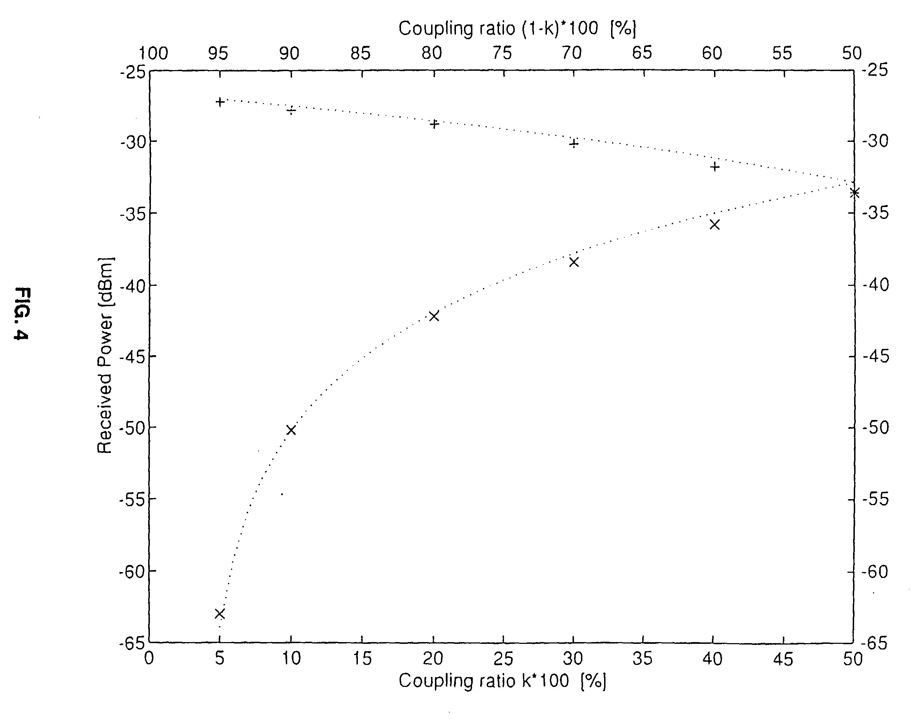

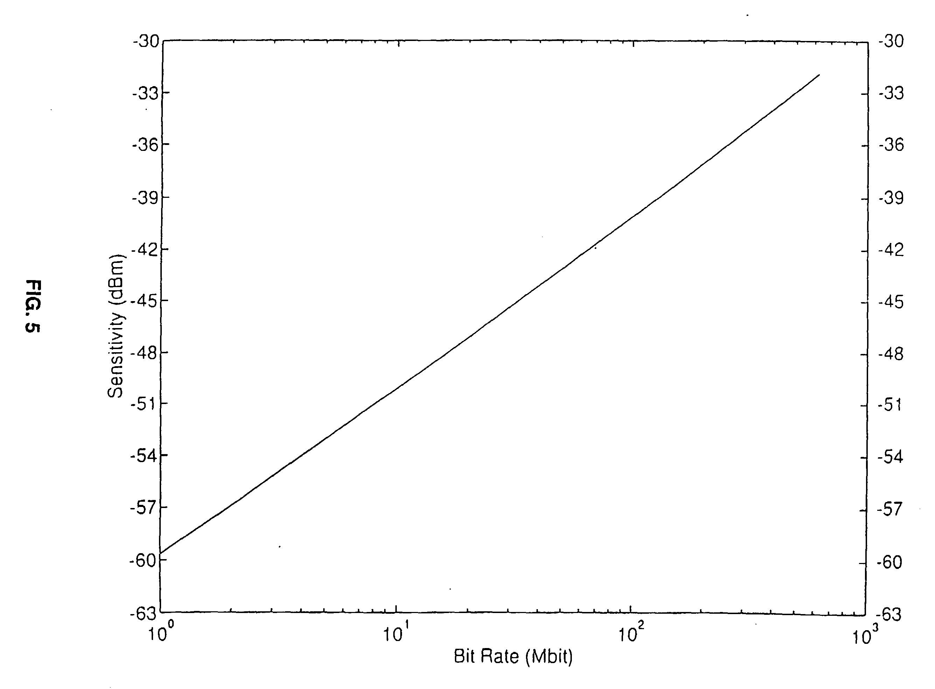

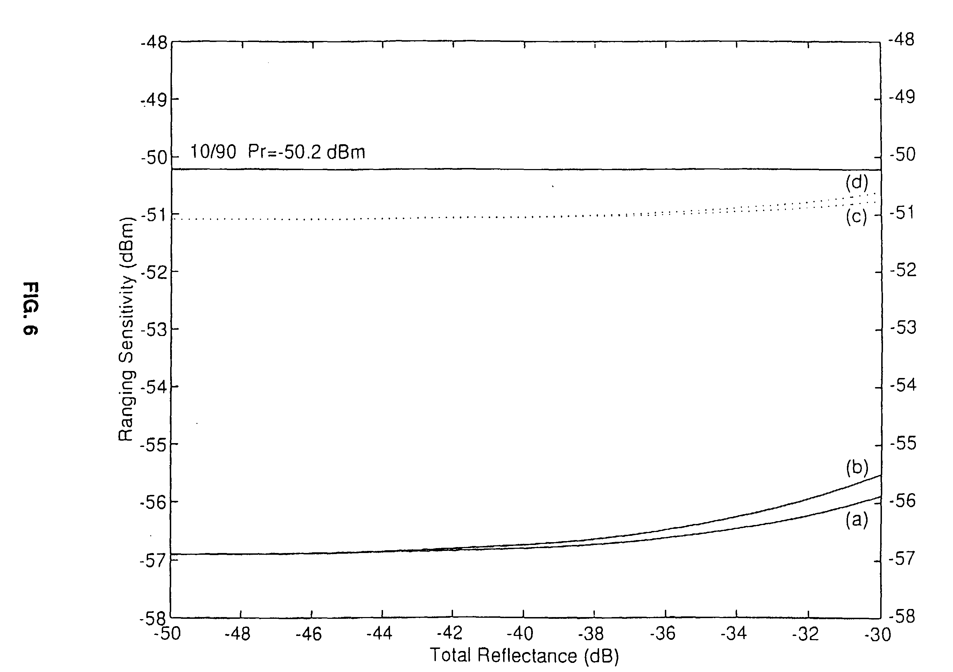

The list of all of the symbols together with their typical values are reported in the tab I. In fig. 4 the behaviour of the received power as a function of the coupling ratio is shown. Dotted lines: theoretical calculations, x, + = experimental data measuring power couplers with various splitting ratios. Data: A=26 dB, Pt=0 dBm, $\gamma$=0.04. As an example, by fixing a 10/90 coupling ratio, the received powers are $P_{r\text{-}rang}$ = - 50.2 dBm (10 %) and $P_{r\text{-}data}$ = -27.5 dBm (90 %), respectively. To evaluate the ranging bit-rate we impose that $P_{r\text{-}rang}$ be also the receiver sensitivity $P_s$, i.e. the minimum detectable average optical power for a given BER. In fig.5 the behaviour of the received sensitivity as a function of the bit rate is reported. However, bidirectional direct-detection systems are sensitive to crosstalk from discrete reflections and Rayleigh backscattering, since the crosstalk is directly coupled to the receiver. The use of broadband sources such as Fabry-Perot lasers significantly reduces the multipath interference and coherent Rayleigh noise, whereas a ranging bit-rate much lower than the data traffic bit-rate allows to filter out the crosstalk before the decision point on both receivers. On the other hand, to assess the impact of the crosstalk-induced shot noise, let us recall that the receiver sensitivity is written as

$$P_s = \frac{Qhv}{\eta}\left( QI_2 f_c + \frac{1}{q}\sqrt{< I^2_{therm} > + < I^2_{refl} > + 2qI_{dark}I_2f_c} \right) \qquad (2)$$

where

$$< I^2_{therm} > = \left[ \frac{4kT}{R_L}\left(1 + \frac{\Gamma}{g_m R_L}\right) + 2qI_{gate} \right]I_2 f_c + 4kT\Gamma\frac{(2\pi C_T)^2}{g_m}I_3 f_c^3 \qquad (3)$$

$$R_L = \frac{G_v}{2\pi C_T I_2 f_c} \text{ ,}(G_v = 10\text{dB}), \text{ and } < I^2_{refl} > = k\cdot 2q\frac{\eta q}{hv}P_{refl}I_2 f_c \qquad (4)$$

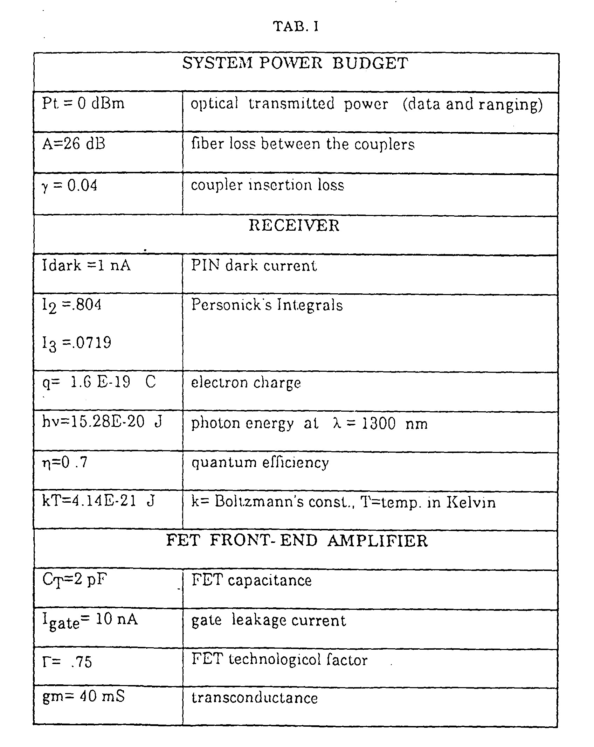

where $P_{refl}$ is the total backreflected power. In fig. 6 the ranging sensitivity vs the total reflectance (as 10log $P_{refl}/P_t$) is reported for two different values of the bit-rate and the coupling ratio. Data are in tab. I. At 2 Mbit/s, (solid lines) fig. 6 shows that 10/90 couplers can be used, curve (a), k=0.1 whereas a slight change of the coupling ratio, 15/85 curve (b), k=0.15 gives a small increase in the ranging sensitivity. By raising the coarse ranging accuracy at 8 Mbit/s (dotted lines), 10/90 couplers still give sensitivity values below the received power $P_r$=-50.2 dBm. In this case, the sensitivity variation owining to the combined effects of the reflectance and the coupling ratio, 10/90 curve (c), k=0.1, 15/85 curve (d), k=0.15 is < 1 dB. Finally, eqns. (2-4) show that the receiver sensitivity at 622 Mbit/s is not affected by the crosstalk-induced shot noise.

From these considerations we can prove that, once a certain signal/noise relation being defined and suitable to assure a minimum B.E.R. (Bit Error Rate) it is possible to guarantee an appropriate sensibility of the receiver reducing adequately the bit-rate. This makes it possible to use highly asymmetric couplers (for instance with a coupling relation of 90/10) and to assure on one hand a perfect reception of the low bit-rate ranging signal, and on the other hand a minimum power loss of the high bit-rate communication signal which are propagating simultaneously in the direction opposed to the low ranging power signal.

As it will be understood by those skilled in the art, the architecture of the coarse ranging device of the invention, based essentially on the counterpropagation of a ranging signal generally with "low frequency" compared to the corresponding communication signal, generally of "low frequency", preserves the proper utility and advantages even in the case of PONs destined to operate in a totally analog way. The considerations made in terms of bit-rate difference (referring primarily to digital systems) remain valid even making reference to a difference of analog modulation frequency. In particular the new networks for multimedia services such as the CATV (Cable Television) foresee in addition to the transport of video channels towards the user also a return channel to be used for the network management and for interactive services. It is therefore evident that the coarse ranging device of the invention is suitable to satisfy such need providing for an auxiliary "low frequency" channel through which the above-mentioned return channel is realized.

Although three embodiments of the present invention have been illustrated and described, it turns out to be evident that this invention is not limited to these forms, but it covers all obvious variations which turn out to be evident to those skilled in the art without departing from the scope of following claims.

Claims

1.  Method for the determination of the optical distance by coarse ranging between an optical network unit (ONU) and the corresponding optical line termination (OLT) connected by means of an optical downstream channel and an optical upstream channel of a passive optical network (PON) for the timing of the transmission of modulated signals from said optical network unit (ONU) towards said optical line termination (OLT) according to a time division TDMA protocol, said method including the step of:

    • stending a ranging command on one of said optical channels adapted to determine the transmission of a ranging signal on a second optical channel,
    • sending said ranging signal with a lower optical power than the communication signal and reducing the modulation frequency of said ranging signal with respect to the modulation frequency of said communication signal,

    characterized in that it includes the steps of:

    connecting said optical network unit (ONU) and said optical line termination (OLT) by means of a first optical upstream link and by a second optical downstream link;
    transmitting said ranging signal on a second optical downstream channel by means of said second optical downstream link, said ranging signal being counter propagated with respect to the communication signal.

2.  Method according to claim 1, characterized in that said ranging command is a digital information transmitted on said first optical channel by means of said second optical link, together with the communication signal (CW-data) and said ranging signal is a signal transmitted on said second optical channel always by means of said second optical link.

3.  Method according to claim 1 characterized in that said ranging command is a signal transmitted on said first optical channel by means of said first optical link and said ranging signal is a signal transmitted on said second optical channel by means of said second optical link.

4.  Method according to claims 2 and 3, characterized in that said ranging signal is generated by a transmitter installed in each optical network unit (ONU) and counterpropagated on the optical downstream channel through which a broadcast communication signal (CW) is transmitted by means of a asymmetric coupler, a similar asymmetric coupler providing at said optical network termination (OLT) for the propagation on the optical downstream channel of said transmission signal (CW) and coupling said counterpropagated ranging signal towards a receiver of the optical network termination (OLT).

5.  Method according to claim 4, characterized in that said transmitter generating the ranging signal includes a laser operating at the same wavelength of laser used for data transmission.

6.  Method according to claim 1, characterized in that the coarse ranging is carried out bidirectionally on the optical upstream channel propagating a ranging signal with a wavelength which is different from the wavelength of the communication signal, by means of wavelenght multiplexing means and coupling means.

7.  A system of the type including:

    • at least an optical network unit (ONU);
    • an optical line termination (OLT) connected by an optical downstream channel and an optical upstream channel of a passive optical network (PON) for the timing of the transmission of signals from said optical network unit (ONU) towards said optical line termination (OLT) according to a TDMA time division protocol;
    • means for determining the optical distance in coarse ranging between said at least optical network unit and said optical line termination and adapted to propagate a ranging signal having a modulation frequency lower than the modulation frequency of the corresponding communication signal (CW, BURST) and a fractional optical power always compared to said communication signal,

    characterized in that said means for determining the optical distance include:

    a first optical communication link and a second optical communication link adapted to connect said optical network unit (ONU) and said optical line termination (OLT)

at least one laser transmission device (TX RANG) of a ranging signal in each one of said optical network units ((ONU);

at least one coupler in each optical network unit (ONU) suitable to counter propagate on said second optical link said ranging signal compared to a corresponding communication signal (CW, BURST);

at least one receiver (RX RANG) for said ranging signal at said optical line termination (OLT);

at least one coupler in said optical line termination (OLT) suitable to couple said ranging signal towards said receiver (RX RANG).

8. A system according to claim 7, characterized in that said ranging signal has the same wavelength of the communication signal and is counterpropagated, compared to the broadcast communication signal (CW), through the optical downstream channel,

said couplers of the optical line termination (OLT) and of each optical network unit (ONU) being asymmetric couplers.

9. A system according to claim 7, characterized in that said optical line termination (OLT) is provided with a second laser transmitter (TX RANG) of a ranging signal, and each optical network unit (ONU) is provided with a receiver (RX RANG) of the counterpropagated ranging signal compared to the communication signal TDMA (BURST) and with a receiver (RX RANG) of a ranging signal counterpropagated, compared to the TDMA communication signal (BURST) through the optical upstream channel.

10. A system according to claim 7, characterized in that said line termination (OLT) and each one of said optical network units (ONU) include:

a transmitter (TX RANG) and a receiver (RX RANG) of a ranging signal with a wavelength which is different from the wavelength of the communication signal TDMA (BURST);

a first coupler and a second wavelength de-multiplexing coupler (WDM);

a ranging signal being propagated through the optical upstream channel in both directions.

11. A system according to any of the claims from 7 to 9, characterized in that said couplers have a coupled power subdivision relation of 90/10.

12. A system according to any of the claims from 7 to 9, characterized in that each set composed by a transmitter/ receiver pair and a relative coupler of said optical line termination (OLP), and of each one of said optical network units (ONU) is realized in an integrated way.

13. A system according to any of the claims 7 to 12, characterized in that said signals are digital and said modulation frequency corresponds to the bit-rate of the signals.

14. A system according to any of the claims from 7 to 12 in which said signals are analog.

**Patentansprüche**

1. Verfahren zur Bestimmung der optischen Entfernung durch "Coarse Ranging" zwischen einer optischen Netzeinheit (ONU) und dem entsprechenden optischen Leitungsende (OLT), die durch einen optischen Abwärtskanal und einem optischen Auwärtskanal eines passiven optischen Netzes (PON) verbunden ist zur Zeitbestimmung der Übertragung modulierter Signale von der genannten optischen Netzeinheit (ONU) in Richtung des genannten optischen Leitungsende (OLT) entsprechend einem TDMA Zeitaufteilungsprotokoll, und das genannte Verfahren schließt die folgenden Schritte ein:

• Übertragung einer "Ranging"-Steuerung auf einem der genannten optischen Kanäle, der geeignet ist, die Übertragung eines "Ranging"-Signals auf einem zweiten optischen Kanal zu definieren,

• Übertragung des genannten "Ranging"-Signals mit einer geringeren optischen Leistung als das Kommunikationssignal und Verringerung der Modulationsfrequenz des genannten Kommunikationssignals,

dadurch gekennzeichnet, daß das Verfahren die folgenden Schritte einschließt:

Verbindung der genannten optischen Netzeinheit (ONU) und dem genannten optischen Leitungsende (OLT) mittels einer ersten optischen Aufwärtsverbindung und einer zweiten optischen Abwärtsverbindung; Übertragung des genannten "Ranging"-Signals auf einem zweiten optischen Abwärtskanal, wobei das genannte "Ranging"-Signal im Vergleich zum Kommunikationskanal entgegengesetzt ausbreitet.

2. Verfahren entsprechend Anspruch 1, dadurch gekennzeichnet, daß die genannte "Ranging"-Steuerung eine digitale Information ist, die auf dem genannten ersten optischen Kanal mittels der genannten, zweiten optischen Verbindung übertragen wird zusammen mit dem Kommunikationssignal (CW-data), und das genannte "Ranging"-Signal ist ein Signal, das auf dem genannten zweiten optischen Kanal immer mittels der genannten zweiten optischen Verbindung übertragen wird.

3. Verfahren entsprechend Anspruch 1, dadurch gekennzeichnet, daß es sich bei der genannten "Ranging"-Steuerung um ein Signal handelt, das auf dem genannten ersten optischen Kanal mittels der genannten ersten optischen Verbindung übertragen wird, und das genannte "Ranging"-Signal ist ein Signal, das auf dem genannten zweiten optischen Kanal mittels der genannten zweiten optischen Verbindung übertragen wird.

4. Verfahren entsprechend den Ansprüchen 2 und 3, dadurch gekennzeichnet, daß das genannte "Ranging"-Signal durch einen Sender erzeugt wird, der in jeder optischen Netzeinheit (ONU) installiert ist, und es breitet sich entgegengesetzt auf dem optischen Abwärtskanal aus, durch den ein Kommunikationssignal "broadcast" (CW) mittels eines asymmetrischen Kupplers übertragen wird, wobei ein entsprechender asymmetrischer Kuppler am genannten optischen Netzende (OLT) für die Ausbreitung des genannten Übertragungssignals (CW) auf dem optischen Abwärtskanal sorgt und das genannte, sich entgegengesetzt ausbreitende "Ranging"-Signal in Richtung eines Empfängers des optischen Netzendes (OLT) verbindet.

5. Verfahren entsprechend Anspruch 4, dadurch gekennzeichnet, daß der genannte Sender, der das "Ranging"-Signal erzeugt, einen Laser einschließt, der mit der selben Wellenlänge arbeitet wie der für die Datenübertragung benutzte Laser.

6. Verfahren entsprechend Anspruch 1, dadurch gekennzeichnet, daß das "Coarse Ranging" bidirektional auf dem optischen Aufwärtskanal ausgeführt wird, das ein "Ranging"-Signal mit einer Wellenlänge überträgt, die von der Wellenlänge des Kommunikationssignals abweicht, und zwar durch Mittel zum Multiplexen der Wellenlänge.

7. Einrichtung vom Typ der folgendes einschließt:

   • mindestens eine optische Netzeinheit (ONU);
   • ein optisches Leitungsende (OLT) verbunden durch einen optischen Abwätskanal und einem optischen Aufwärtskanal eines passiven optischen Netzes (PON) zur Zeitbestimmung für die Übertragung von Signalen von der genannten optischen Netzeinheit (ONU) zum optischen Leitungsende (OLT) entsprechend einem TDMA Zeitaufteilungsprotokoll;
   • Mittel zur Bestimmung der optischen Entfernung durch "Coarse Ranging" zwischen mindestens einer genannten optischen Netzeinheit und dem genannten optischen Leitungsende, die geeignet sind, ein "Ranging"-Signal zu verbreiten, das eine Modulationsfrequenz hat, die geringer ist als die Modulationsfrequenz des entsprechenden Kommunikationssignals (CW, BURST), sowie eine fraktionierte optische Leistung, immer im Vergleich zum genannten Kommunikationssignal,

   • dadurch gekennzeichnet, daß genannte Mittel zur Bestimmung der optischen Entfernung folgendes einschließt:

   • eine erste optische Kommunikationsverbindung und eine zweite optische Kommunikationsverbindung, die geeignet sind, die genannte optische Netzeinheit (ONU) und das genannte optische Leitungsende (OLT) zu verbinden;
   • mindestens eine Laserübertragungsvorrichtung (TX RANG) für ein "Ranging"-Signal in jeder der genannten optischen Netzeinheiten (ONU);
   • Mindestens einen Kuppler in jeder optischen Netzeinheit (ONU), die geeignet ist, auf der genannten zweiten optischen Verbindung das genannte "Ranging"-Signal im Vergleich zu einem entsprechenden Kommunikationssignal (CW, BURST) entgegengesetzt zu verbreiten;
   • Mindestens einen Empfänger (RX RANG) für das genannte "Ranging"-Signal am genannten optischen Leitungsende (OLT);
   • Mindestens einen Kuppler im genannten optischen Leitungsende (OLT), der geeignet ist, das genannte "Ranging"-Signal in Richtung des genannten Empfängers (RX RANG) zu koppeln.

8. Einrichtung entsprechend Anspruch 7, dadurch gekennzeichnet, daß das genannte "Ranging"-Signal die gleiche Wellenlänge wie das Kommunikationssignal hat, und im Vergleich zum Kommunikationssignal "broadcast" (CW) entgegengesetzt durch den optischen Abwärtskanal verbreitet wird,
    wobei es sich bei den genannten Kupplern des optischen Leitungsendes (OLT) und der optischen Netzeinheit (ONU) um asymmetrische Kuppler handelt.

9. Einrichtung entsprechend Anspruch 7, dadurch gekennzeichnet, daß das optische Leitungsende (OLT) mit einem zweiten Lasersender (TX RANG) für das "Ranging"-Signal versehen ist, und jede optische Netzeinheit (ONU) ist versehen mit einem Empfänger (RX RANG) des im Vergleich zum Kommunikationssignal TMDA (BURST) entgegengesetzt verbreiteten "Ranging"-Signals sowie einem Empfänger (RX RANG) des im Vergleich zum TDMA Kommunikationssignal durch den optischen Aufwärtskanal entgegengesetzt verbreiteten "Ranging"-Signals.

10. Einrichtung entsprechend Anspruch 7, dadurch gekennzeichnet, daß das genannte Leitungsende (OLT) und jede der optischen Netzeinheiten (ONU) folgendes einschließt:

    • einen Sender (TX RANG) und einen Empfänger (RX RANG) des "Ranging"-Signals mit einer Wellenlänge, die von der Wellenlänge des Kommunikationssignals TDMA (BURST) abweicht;
    • einen ersten Kuppler und einen zweiten Kuppler zur Wellenlängen-Demodulation (WDM);

11. Einrichtung entsprechend irgendeinem der Ansprüche von 7 bis 9, dadurch gekennzeichnet, daß die genannten Kuppler ein gekuppeltes Leistungsaufteilungsverhältnis von 90/10 haben.

12. Einrichtung entsprechen irgendeinem der Ansprüche von 7 bis 9, dadurch gekennzeichnet, daß jedes Set, das sich aus einem Sender/Empfängerpaar und einem entsprechenden Kuppler des genannten optischen Leitungsendes (OLP) und aus je einer der genannten optischen Netzeinheiten (ONU) zusammensetzt, in einer integrierten Form verwirklicht wird.

13. Einrichtung entsprechend irgendeinem der Ansprüche von 7 bis 12, dadurch gekennzeichnet, daß die genannten Signale digital sind und daß die genannte Modulationsfrequenz der Bitfolge der Signale entspricht.

14. Einrichtung entsprechend irgendeinem der Ansprüche von 7 bis 12, in dem die genannten Signale analog sind.

## Revendications

1. Procédé pour la définition de la distance optique par le "coarse ranging" entre une unité de réseau optique (ONU) et une station terminale de ligne optique (OLT = Optical Line Termination) connectées par un parcours optique en aval et un parcours optique en amont d'un réseau optique passif (PON) pour la temporisation de la transmission de signaux modulés en provenance de la dite unité de réseau optique (ONU) vers la dite station terminale de ligne optique (OLT) selon un protocole à division de temps TDMA, et le dît procédé comprend la phase:

    • d'envoyer une commande de "ranging" sur un des canaux optiques adapté pour définir la transmission d'un signal de "ranging" sur un deuxième canal,
    • d'envoyer le dît signal de "ranging" avec une puissance optique plus basse que le signal de communication et de réduire la fréquence de modulation du dît signal de"ranging" par rapport à la fréquence de modulation du dît signal de communication,

    caractérisé en ce qu'il comprend les phases suivantes:

    - connecter la dite unité de réseau optique (ONU) et la dite station terminale de ligne optique (OLT) par le moyen d'une première connexion optique en amont et par une deuxième connexion optique en aval;
    - transmettre le dît signal de "ranging" sur un deuxième canal optique en aval par le moyen de la dite deuxième connexion optique en aval, le dît signal de "ranging" étant contre-propagé par rapport au signal de communication.

2. Procédé selon la revendication 1, caractérisé en ce que la dite commande de "ranging" est une information digitale transmise sur le dît premier canal optique par le moyen de la dite deuxième connexion optique, ensemble avec le signal de communication (CW-data), et le dît signal de "ranging" est un signal transmis sur le dît deuxième canal optique, toujours par le moyen de la dite deuxième connexion optique.

3. Procédé selon la revendication 1, caractérisé en ce que la dite commande de "ranging" est un signal transmis sur le dît premier canal optique par le moyen de la dite première connexion optique, et le dît signal de "ranging" est un signal transmis sur le dît deuxième canal optique par le moyen de la dite deuxième connexion optique.

4. Procédé selon les revendications 2 et 3, caractérisé en ce que le dît signal de "ranging" est généré par un transmetteur installé dans chacune unité de réseau optique (ONU) et contrepropagé sur un canal optique en aval par lequel un signal de communication "broadcast" (CW) est transmis par le moyen d'un coupleur asymétrique, un coupleur asymétrique similaire prévoyant à la dite station terminale de réseau (OLT) à la propagation sur le canal optique en aval du dît signal de transmission (CW) et couplant le dît signal de "ranging" contrepropagé vers un récepteur de la station terminale du réseau optique (OLT).

5. Procédé selon la revendication 4, caractérisé en ce que le dît transmetteur générant le signal de "ranging" comprend un laser fonctionnant à la même longueur d'onde du laser utilisé pour la transmission de données.

6. Procédé selon la revendication 1, caractérisé en ce que le "coarse ranging" est effectué de manière bidirectionnelle sur le canal optique en amont propageant un signal de "ranging" avec une longueur d'onde, qui diffère de la longueur d'onde du signal de communication, par le moyen de dispositifs de multiplexage de longueurs d'ondes et de couplage.

7. Dispositif du type, qui comprend:

   • au moins une unité de réseau optique (ONU);
   • une station terminale de ligne optique (OLT) connectée par un canal optique en aval et un canal optique en amont d'un réseau optique passif (PON) pour la temporisation de la transmission de signaux en provenance de la dite unité de réseau optique (ONU) vers la dite station terminale de ligne optique (OLT) selon un protocole à division de temps (TDMA);
   • des moyens pour la définition de la distance optique en "coarse ranging" entre au moins une unité de réseau optique et la dite station terminale de ligne optique et appropriées à propager un signal de "ranging" ayant une fréquence de modulation plus basse que la fréquence de modulation du signal de communication correspondant (CW, BURST) et une puissance optique fractionnelle toujours comparée au dît signal de communication,

   caractérisé en ce que les dits moyens pour la définition de la distance optique comprennent:

   - une première connexion de communication optique et une deuxième connexion de communication optique appropriées pour connecter la dite unité de réseau optique (ONU) et la dite station terminale de ligne optique (OLT);
   - au moins un dispositif de transmission laser (TX RANG) d'un signal de "ranging" dans chaque des dites unités optiques (ONU);
   - au moins un coupleur dans chaque unité de réseau optique (ONU) apte à contrepropager sur la dite deuxième connexion optique le dît signal de "ranging" comparé au signal de communication correspondant (CW, BURST);
   - au moins un récepteur (RX RANG) pour le dît signal de "ranging" à la dite station terminale de lignw optique (OLT);
   - au moins un coupleur dans la dite station terminale de ligne optique (OLT) apte à coupler le dît signal de "ranging" vers le dît récepteur (RX RANG).

8. Dispositif selon la revendication 7, caractérisé en ce que le dît signal de "ranging" a la même longueur d'onde du signal de communication et il est contrepropagé par rapport au signal de communication "broadcast" (CW) par le canal optique en aval,
   les dits coupleurs de la station terminale de ligne optique (OLT) et de chaque unité de réseau optique (ONU) étant des coupleurs asymétriques.

9. Dispositif selon la revendication 7, caractérisé en ce que la dite station terminale de ligne optique (OLT) est équipée d'un deuxiuème transmetteur laser (TX RANG) d'un signal de "ranging", et chaque unité de réseau optique (ONU) est équipée d'un récepteur (RX RANG) du signal de "ranging" contrepropagé comparé au signal de communication TDMA (BURST) et d'un récepteur (RX RANG) d'un signal de "ranging" contrepropagé, comparé au signal de communication TDMA (BURST) par un canal optique en amont.

10. Dispositif selon la revendication 7, caractérisé en ce que la dite station terminale de ligne (OLT) et chacune des dites unités de réseau optiques (ONU) comprennent:

  - un transmetteur (TX RANG) et un récepteur (RX RANG) d'un signal de ranging avec une longueur d'onde, qui diffère de la longueur d'onde du signal de communication TDMA (BURST);
  - un premier coupleur et un deuxième coupleur de dé-multiplexage de longueur d'onde (WDM);
  - unsignal de "ranging" étant propagé par le cannai optique en amont dans les deux directions.

11. Dispositif selon n'importe laquelle des revendications de 7 à 9, caractérisé en ce que les dits coupleurs ont un rapport de subdivision de puissance couplée de 90/10.

12. Dispositif selon n'importe laquelle des revendications de 7 à 9, caractérisé en ce que chaque groupe est composé par une paire de transmetteur/récepteur et un coupleur relatif de la dite station terminale de ligne optique (OLT) et de chacune des unités de réseau optique (ONU) est réalisé en forme intégrée.

13. Dispositif selon n'importe laquelle des revendications de 7 à 12, caractérisé en ce que les dits signaux sont digitaux et la dite fréquence de modulation correspond à la vitesse de bit des signaux.

14. Dispositif selon n'importe laquelle des revendications de 7 à 12, dans lequel les signaux sont analogues.

FIG.1

EP 0 840 963 B1

EP 0 840 963 B1

OLT

| RX-BURST | 90% |
| TX-RANG | 10% |

← BURST

→ RANGING

1:N

90% | TX-BURST
10% | RX RANG

ONU

→

CW

1:N

← RANGING

| TX-CW | 90% |
| RX RANG | 10% |

90% | RX-CW
10% | TX-RANG

FIG.2

FIG.3

**FIG. 4**

**FIG. 5**

EP 0 840 963 B1

17

**FIG. 6**

TAB. I

| SYSTEM POWER BUDGET | |
|---|---|
| $Pt = 0$ dBm | optical transmitted power (data and ranging) |
| A=26 dB | fiber loss between the couplers |
| $\gamma = 0.04$ | coupler insertion loss |
| RECEIVER | |
| Idark =1 nA | PIN dark current |
| $I_2$ =.804<br><br>$I_3$ =.0719 | Personick's Integrals |
| q= 1.6 E-19 C | electron charge |
| h$\nu$=15.28E-20 J | photon energy at $\lambda = 1300$ nm |
| $\eta$=0.7 | quantum efficiency |
| kT=4.14E-21 J | k= Boltzmann's const., T=temp. in Kelvin |
| FET FRONT-END AMPLIFIER | |
| $C_T$=2 pF | FET capacitance |
| $I_{gate}$= 10 nA | gate leakage current |
| $\Gamma$= .75 | FET technological factor |
| gm= 40 mS | transconductance |